Europäisches Patentamt

European Patent Office

Office européen des brevets

(19)

(11) Numéro de publication: **0 058 451**
**A1**

(12) # DEMANDE DE BREVET EUROPEEN

(21) Numéro de dépôt: 82200135.0

(22) Date de dépôt: 04.02.82

(51) Int. Cl.³: **F 16 K 17/38**
**F 16 K 17/04, F 23 N 5/24**

(30) Priorité: 10.02.81 FR 8102545

(43) Date de publication de la demande:
25.08.82 Bulletin 82/34

(84) Etats contractants désignés:
AT BE CH DE FR GB IT LI LU NL SE

(71) Demandeur: SAUNIER DUVAL EAU CHAUDE
CHAUFFAGE S.D.E.C.C. - Société anonyme
6, rue Lavoisier
F-93107 Montreuil Cedex(FR)

(72) Inventeur: Dewaegheneire, Gabriel
Vredelaan 31
B-8740 Deerlijk(BE)

(72) Inventeur: de Lombaert, Jean-Pierre
Kapelstraat 133
B-1710 Dilbeek(BE)

(72) Inventeur: Berenfeld, Georges
62 avenue Mozart
B-1190 Bruxelles(BE)

(74) Mandataire: Lombaerts, Jozef et al,
N.V. Bekaert S.A. Leo Bekaertstraat 1
B-8550 Zwevegem(BE)

(54) Dispositif automatique de sécurité anti-surchauffe pour canalisations de fluides.

(57) Dispositif automatique de sécurité anti-surchauffe pour canalisations de fluides, qui contient un membre tubulaire (1,2,3), un corps obturateur (4) verrouillé un appui de clapet (5), un organe verrouilleur et un élément métallique à mémoire (6) de forme. L'élément métallique à mémoire (6) se déplace en direction perpendiculaire à l'organe verrouilleur à ressort.

FIG.1

EP 0 058 451 A1

## DISPOSITIF AUTOMATIQUE DE SECURITE ANTI-SURCHAUFFE POUR CANALISATIONS DE FLUIDES

L'invention a pour objet un dispositif automatique de sécurité sous forme d'un clapet obturateur agissant en cas de surchauffe ou de refroidissement accidentelle ou en cas d'incendie à arrêter l'admission d'un fluide, par exemple inflammable ou dangereux aux appareils ou installations de nature industrielle, domestique et autre. Ces dispositifs de forme rigide, par exemple du métal, sont très utils comme mesure de sécurité pour obturer l'admission du gaz aux appareils domestiques de chauffage lors d'un accroissement accidental de la température ambiante ou du gaz dans la conduite.

Un dispositif d'obturation, sensible à la chaleur, est décrit dans le brevet américain No. 1.489.326. Un tel dispositif sert à maîtriser des fuites de gaz avec les risques d'explosion lors d'une surchauffe exagérée ou en cas d'incendie. Le fluide doit changer de direction en traversant le dispositif ce qui provoque une perte de pression. Les circonstances n'admettent pas toujours l'installation d'un jarret dans un système de conduites. La bille, comme élément d'obturation est en principe adhérée au paroi du dispositif. Ce procédé emporte des risques de marche inattendue ou de marche à des températures indésirables. Une fois choisi le type d'adhésif, on ne sait plus contrôler ni ajuster la température de mise en marche. Une matière adhésive subit facilement un vieillissement p.ex. sous l'influence d'une condensation.

Le dispositif tel que décrit dans le brevet américain No. 1.489.326 fonctionne essentiellement par les effets de gravité. Après sa mise en marche la matière adhésive peut se répandre sur l'appui de clapet et gêner la régénération de l'appareil. L'emploi d'un alliage adhésif de fusion crée aussi un retard d'activation par la chaleur nécessaire à la fusion. La régénération de ce dispositif est difficile.

Un clapet de sécurité actionné par un élément en métal à mémoire de forme est déjà connu du brevet anglais No. 1.539.637. La perte en pression du fluide est importante parce que celui-ci doit changer deux fois de direction. L'élément à mémoire peut être chauffé seulement par le fluide lui-même. La construction de cet appareil est assez compliquée et demande un multiple d'opérations.

Un objet de l'invention est un dispositif de sécurité anti-surchauffe de canalisations de fluides agissant sur un clapet d'arrêt du courant fluide. Ce dispositif est inséré de préférence en ligne droite d'une conduite de fluide et ne contient pas des membres ou des organes communiquant vers l'extérieur. Les dimensions ne sont pas très différentes de celles de la conduite même.

Le dispositif selon l'invention fonctionne avec des organes mécaniques dans n'importe quelle position, indépendamment de la gravité. Il réagit surtout lorsque la température de l'environnement est élevée sans qu'il y a un débit de fluide. La température d'activation du dispositif selon l'invention peut être ajustée individuellement à un niveau prédéterminé pendant son assemblage entre des limites étendues et selon les besoins.

Le dispositif automatique de sécurité selon l'invention contient un corps obturateur verrouillé, un appui de clapet et un élément sensible à la température. Cet élément sensible à la température est constitué d'un alliage métallique, connu en soi et susceptible de changer de forme d'une façon contrôlée à une température déterminée et à une tension déterminée par la transformation de sa structure métallographique dans une autre structure métallographique. Le changement de forme dans le cas mentionné porte la dénomination "mémoire de forme" et est une propriété de certains alliages. Le changement de forme se produit lors d'une surchauffe ou d'une baisse de température d'une façon régénératrice et répétitive à un seuil de température précis et ajustable.

Le dispositif selon l'invention peut être incorporé par exemple dans les appareils domestiques de chauffage pour arrêter immédiatement le gaz lors d'un surchauffement local. Il est évident qu'un tel dispositif est aussi aménageable comme clapet d'arrêt pour des situations industrielles et aussi dans des cas particuliers où un fluide avec une température trop faible ou avec un refroidissement local des canalisations doit être coupé. L'élément métallique à mémoire est d'un côté solidaire au membre tubulaire formant l'enveloppe du dispositif, par exemple en butée contre un arrêt fixe et de l'autre côté, par l'intermédiaire du corps obturateur en butée contre un organe verrouilleur à ressort à déplacement perpendiculaire au déplacement de l'élément métallique à mémoire. De préférence cet élément métallique à mémoire est l'organe déplaçant le corps obturateur. Sous forme d'un ressort hélicoïdal de fil il presse soit directement par un bout plié de la dernière spire, soit indirectement par un disque perforé le corps obturateur contre l'organe verrouilleur à ressort. La pression dynamique du fluide sur le corps obturateur doit de préférence rester plus petite que la force exercée par l'élément métallique à mémoire, sauf dans les conditions de débit intolérable.

- 4 -

0058451

Le corps obturateur est un organe mobile et inaltérable disposé à l'intérieur du dispositif et jouant le rôle de clapet obturateur. En alternative il est à envisager que l'action de l'élément métallique à mémoire est assistée, complétée ou combinée avec un élément de ressort conventionnel ou un mécanisme procurant la même fonction. Le dispositif selon l'invention peut être incorporé dans un mécanisme plus vaste et destiné à d'autres opérations ou régulations additionnelles.

Un élément de ressort conventionnel est parfois incorporé entre autre pour créer une prétension pour le réglage de température de transition et/ou comme le moteur déplaçant l'élément obturateur. Il est à noter que, dans l'état martensitique , en-dessous de la température de transition, l'alliage comporte une résistance mécanique plus faible, notamment une limite élastique plus basse.

Le dispositif dans sa forme la plus élémentaire est faible et se fabrique à un prix de revient réduit. Le corps obturateur peut avoir n'importe quelle forme connu en soi, mais de préférence consiste d'un clapet sphérique à mouvement libre en appui contre un disque mobile et perforé manoeuvré par un ressort métallique à mémoire de forme et retenu par un jeu de griffes souples, solidaires du corps du dispositif. Les griffes souples sont de préférence faites de lamelles courbées en acier à ressort. En plus, les griffes souples constituent de préférence une sécurité supplémentaire en bloquant le clapet sphérique en position de fermeture après le retrait du ressort. En variante, le profil de ces griffes peut être un tel que l'élément obturateur est retourné sur son siège original par un jet de fluide sous pression en sens inverse.

L'installation du dispositif selon l'invention est faite de préférence à des lieux où un gradient maximale de température est plus probable, par exemple près des parois anti-feu, d'un mur extérieur du bâtiment ou à l'entrée du brûleur de chauffage.

L'invention concerne aussi des appareils à gaz combustible dans lesquels le clapet d'arrêt est monté en amont du brûleur.

Des caractéristiques particulières et des avantages de l'invention apparaîtront à la lecture de la description des exemples non limitatifs de réalisation en référence aux dessins 1 à 3, qui représentent une vue en coupe du dispositif.

Un corps extérieur en laiton sous forme d'un membre tubulaire qui renferme l'ensemble des éléments nécessaires au fonctionnement, se présente en deux parties, une première section courte 2 avec une extrémité filetée 3 (raccord femelle), qui s'emboîte dans une seconde section formant le membre tubulaire 1 du dispositif lequel dispose aussi d'une extrémité filetée 7 (raccord mâle). L'ensemble peut ainsi s'insérer facilement dans une canalisation de gaz. La paroi du membre tubulaire 1 est relativement mince pour augmenter la conduction, mais étudiée pour résister aux efforts mécaniques nécessaires pour le raccordement. Un objet métallique 4 inaltérable de forme sphérique joue le rôle de clapet susceptible de s'appliquer contre un siège conique 5 réalisé dans le membre tubulaire 1.

L'élément métallique à mémoire est constitué d'un ressort 6 en alliage qui présente la propriété de se déformer dans un certain sens à une certaine température.

Il est en appui d'un côté contre la bordure circulaire intérieure de la section courte 2 emboîtée dans le membre tubulaire qui constitue le point fixe et d'un autre côté contre un disque mobile ajouré 8 qui peut coulisser à l'intérieur du corps principal. Ce disque est en appui contre le clapet sphérique 4 lui-même maintenu mécaniquement par des griffes d'accrochage 9 fixées à une entretoise 10 portant aussi sur la section courte du boîtier. Les griffes sont des lamelles métalliques recourbées susceptibles de s'écarter sous l'effet de déplacement du clapet sphérique dans le sens de la flèche.

Pour une bonne marche du dispositif il est préféré de ranger le ressort 6 à mémoire tout près de la paroi extérieur (1).

En cas d'augmentation excessive de la température ambiante au niveau du dispositif, grâce à sa bonne conduction, le membre tubulaire 1 transmet cette température au ressort 6 qui constitue l'élément sensible. Dès que sa valeur de température prédéterminée est atteinte, il se dilate et par l'intermédiaire du disque 3 exerce une poussée contre le clapet sphérique 4 dans le sens indiqué. Ce dernier va donc écarter l'extrémité des griffes 9 et leur échapper pour finalement, - toujours sous la poussée du ressort - s'appliquer contre son siège 5 et obstruer l'orifice de passage du gaz. Le clapet sphérique 4 reste dans cette position même en cas du retrait du ressort dilatable 6 car il est en appui contre les faces supérieures recourbées des griffes 9 qui sont revenues - du fait de leur élasticité - dans la première position qu'elles occupaient avant l'échappement du clapet. Cette disposition constitue une sécurité complémentaire au dispositif.

Le dispositif décrit ci-dessous a l'avantage d'être actif à la fois dans le cas d'une source de châleur extérieure à la tuyauterie et en même temps dans le cas d'un fluide chaud. Le temps de réaction dans le premier cas est très court. La perte de pression à un débit modéré peut être minimalisée et réduite à quelques mm de colonne d'eau.

L'invention ne se limite pas à l'exemple de réalisation représenté, mais englobe aussi toutes les variantes constructives notamment dans la forme et la disposition réciproque des éléments et pièces mécaniques.

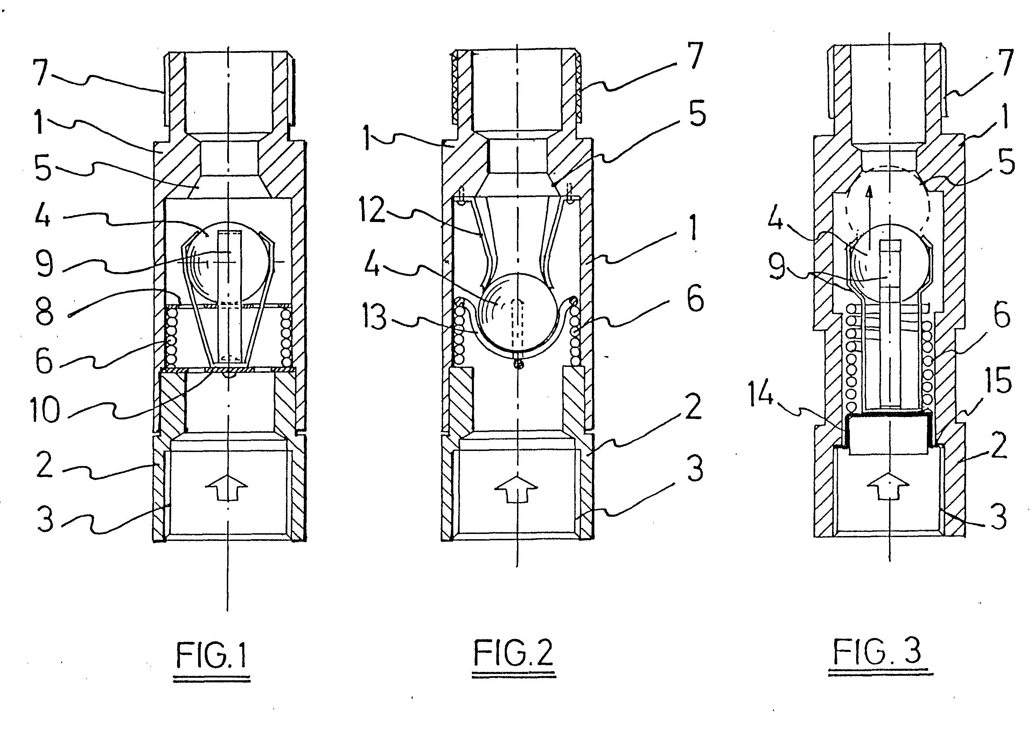

La figure 2 donne en variante une coupe du dispositif à fonction redressable. Le clapet sphérique 4 est tenu en place par trois ou quatre griffes 12 sous forme de lamelles métalliques courbées et faisant ressort. Ces bras appuient l'élément obturateur 4 sous forme de bille en sens inverse dans une corbeille 13 qui remplace le disque mobile ajouré 8 de l'exemple précédent. Cette corbeille est par exemple composée de deux bouts de fil métalliques courbés se croisant sous un angle droit et interconnectés par soudage. Cette corbeille peut aussi être une partie intégrante du ressort en métal à mémoire de forme. Une fois que le clapet 4 est actionné par le ressort dilatable 6, il va se mettre contre son siège 5 comme indiqué par la flèche et obturer l'orifice de la conduite sous la pression du ressort. Le clapet peut être remis en position originale une fois que la température est diminuée et que le danger est disparu en actionnant la bille par un coup de pression, par exemple avec du gaz sous haute pression en sens inverse. Cette opération peut se faire de n'importe quel endroit du réseau sans démontage quelconque, à condition qu'il n'y a pas d'échappement libre.

Les essais avec un dispositif semblable à celui de la figure 1, incorporé dans une canalisation de 25 mm (le diamètre du dispositif étant légèrement plus grand) ont été effectués dans les conditions suivantes :

- débit de gaz à 15°C - 1013 mbar : 3,25 m$^3$/h
- pression d'entrée : 250 mm colonne d'eau
- pression différentielle : 6 mm colonne d'eau
- température de l'environnement : 400°C
- temps de fermeture du dispositif :
    * lorsqu'il y a un débit de gaz dans la canalisation de 3,25 m$^3$/h à 15°C : 120 secondes
    * lorsqu'il n'y a pas du débit : 90 secondes
- fuite au niveau du clapet après déclenchement : 0,3 l par heure à 300 mm colonne d'eau
- essais à orientation variable du dispositif : indifférence du temps de réaction
- composition de l'alliage à mémoire de forme en poids 70,10 % Cu , 25,59 % Zn , 4,25 % Al à température d'activation au chauffement de 53°C. Le fil a un diamètre de 1,5 mm. Le ressort de 7 spires avec un diamètre de 17 mm et une longueur de 25 mm dilate jusqu'à 38 mm à une température de 200°C.

Une autre variante du fonctionnement du dispositif est constituée par l'interchangement des fonctions des organes. Les lamelles courbées 12 de la figure 2 peuvent être en métal à mémoire de forme tandis que le ressort actionnant 6 est en acier à ressort sous une prétension, la position et les dimensions devant être adaptées à la situation changée.

La figure 3 est une variante dans laquelle le profil spécifique du membre tubulaire 1 permet de lier tous les organes à un disque fixe ajouré 14 en butée contre un rebord interne 15 du membre tubulaire 1 dont la section courte 2 devient une partie intégrante.

REVENDICATIONS :

1. Dispositif automatique de sécurité anti-surchauffe pour canalisations de fluides qui contient un membre tubulaire à dimensions comparables aux dimensions des canalisations et qui contient un corps obturateur verrouillé, un appui de clapet, un organe verrouilleur et un élément métallique à mémoire susceptible de changer de forme à une température et une tension déterminée par la transformation de sa structure métallographique dans une autre structure, caractérisé en ce que l'élément métallique à mémoire est d'un côté solidaire au membre tubulaire et de l'autre côté, par intermédiaire du corps obturateur en butée contre un organe verrouilleur à ressort à déplacement perpendiculaire au déplacement de l'élément métallique à mémoire.

2. Dispositif automatique de sécurité anti-surchauffe selon la revendication 1, caractérisé en ce que l'élément métallique à mémoire est l'organe moteur déplaçant le corps obturateur.

3. Dispositif automatique de sécurité anti-surchauffe selon les revendications 1 ou 2, caractérisé en ce que l'élément métallique à mémoire est sous forme d'un ressort hélicoïdale de fil appuyant directement le corps obturateur contre l'organe verrouilleur à ressort.

4. Dispositif automatique de sécurité anti-surchauffe selon les revendications 1 ou 2, caractérisé en ce que l'élément métallique à mémoire est sous forme d'un ressort hélicoïdale de fil appuyant par l'intermédiaire d'un membre secondaire le corps obturateur contre l'organe verrouilleur à ressort.

5. Dispositif automatique de sécurité anti-surchauffe selon les revendications 1 à 4, caractérisé en ce que le corps obturateur consiste d'un clapet sphérique.

6. Dispositif automatique de sécurité anti-surchauffe selon les revendications 1 à 4, caractérisé en ce que l'organe verrouilleur est formé de griffes souples solidaires du membre tubulaire du dispositif.

7. Dispositif automatique de sécurité anti-surchauffe selon la revendication 6, caractérisé en ce que les griffes souples constituent une sécurité supplémentaire en bloquant le corps obturateur en position de fermeture après le retrait de l'élément métallique à ressort.

8. Appareil à gaz combustible dont un dispositif de sécurité selon une des revendications précédentes, est incorporé.

FIG.1          FIG.2          FIG.3

- 1/1 -

0058451

Office européen
des brevets

**RAPPORT DE RECHERCHE EUROPEENNE**

| Catégorie | Citation du document avec indication, en cas de besoin, des parties pertinentes | Revendica-tion concernée | CLASSEMENT DE LA DEMANDE (Int. Cl. 3) |
|---|---|---|---|
| **DOCUMENTS CONSIDERES COMME PERTINENTS** ||||
| D,A | GB - A - 1 539 637 (STANDARD TELEPHONES AND CABLES LTD.) <br><br> * figures; revendication 1 * | 1-4,8 | F 16 K 17/38 <br> 17/04 <br> F 23 N 5/24 |
| A | FR - A - 2 230 917 (GENERAL MOTORS LTD.) <br><br> * figures 3,4,6; revendication 1 * | 1,2,5 | |
| A | DE - B - 1 019 879 (H.W. HOLLANDS) <br><br> * figures 1,2; revendications 1 à 3 * | 1,5-8 | **DOMAINES TECHNIQUES RECHERCHES (Int. Cl. 3)** <br><br> F 16 K <br> F 23 N |
| A | FR - A - 2 363 044 (WABCO WESTING-HOUSE) <br><br> * figures * | 4 | |
| A | FR - A - 767 915 (J. MARTINY) <br><br> * figure 3 * | 5,6 | |
| A | FR - A - 2 444 216 (MIYAWAKI STEAM TRAP MFG CO. LTD.) | | **CATEGORIE DES DOCUMENTS CITES** |
| A | US - A - 3 445 086 (F.R. QUINN) | | X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons |
| A | GB - A - 497 688 (W.B. TRETHEWEY) | | |
| A | US - A - 3 819 151 (C.A. KISH) ./. | | &: membre de la même famille, document correspondant |

| X | Le présent rapport de recherche a été établi pour toutes les revendications |
|---|---|

| Lieu de la recherche | Date d'achèvement de la recherche | Examinateur |
|---|---|---|
| La Haye | 12-05-1982 | THIBO |

OEB Form 1503.1    06.78

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| A | FR - A - 1 241 205 (RUMPLER S.A.) | |
| A | FR - A - 2 136 023 (VERNAY LABORATORIES INC.) | |
| A | US - A - 3 483 888 (H. WURZEL) | |

**DOCUMENTS CONSIDERES COMME PERTINENTS**

CLASSEMENT DE LA DEMANDE (Int. Cl.³)

DOMAINES TECHNIQUES RECHERCHES (Int. Cl.³)